# EUROPÄISCHE PATENTSCHRIFT

(11) **EP 1 647 702 B1**
(45) Veröffentlichungstag und Bekanntmachung des Hinweises auf die Patenterteilung: **23.04.2008**
(21) Anmeldenummer: 05107789.9
(22) Anmeldetag: 25.08.2005
(51) Int. Cl.: F02M 35/10, F02M 35/02, B60H 1/00, B01D 46/00

(54) **Ansaugsystem einer Brennkraftmaschine**
Intake system for internal combustion engine
Système d'admission d'un moteur à combustion interne

(30) Priorität: 12.10.2004 DE 102004049791
(43) Veröffentlichungstag der Anmeldung: 19.04.2006
(73) Patentinhaber: MANN+HUMMEL GmbH, 71638 Ludwigsburg (DE)
(72) Erfinder: Scholl, Hans-Peter, 74395, Mundelsheim (DE); Stahl, Jürgen, 71640, Ludwigsburg (DE); Daubner, Heinz, 74343, Sachsenheim (DE); Lebherz, Reinhold, 74395, Mundelsheim (DE)

(56) Entgegenhaltungen:
- EP-A- 0 435 588
- DE-A1- 19 859 854
- US-A- 5 640 937
- US-A1- 2003 010 566
- US-B1- 6 550 440

## Beschreibung

### Technisches Gebiet

Die Erfindung betrifft ein Ansaugsystem einer Brennkraftmaschine mit wenigstens einer Rohluftleitung, wenigstens einem Luftfilter, welcher in einem Luftfiltergehäuse angeordnet ist und wenigstens einer Reinluftleitung.

### Stand der Technik

Bei Ansaugsystemen der bekannten Art werden zur Reduzierung der Ansauggeräusche, Teile des Luftfiltergehäuses oder der Rohluftleitung mit schalldämmenden Wandauskleidungen versehen. Als Schallschluckstoff wird gelegentlich ein Gewebe, Gewirke oder Gestrick verwendet, das an besonders kritischen Stellen innerhalb des Gehäuses oder der Leitung angeordnet wird.

Aus der DE 19859854 ist ein Filter insbesondere für die Ansaugluft von Brennkraftmaschinen bekannt, wobei das Filtergehäuse mindestens eine Versteifung aufweist. Diese Versteifung dient zur Veränderung der Eigenschwingung des Bauteils. Die Versteifung kann an einer Stelle des Gehäuses angebracht werden, welche bei einer Schwingungsanregung die größte Schwingungsamplitude besitzen würde. Auf diese Weise lässt sich die Schwingung des Gehäuses unterbinden. Allerdings sind hierzu Versteifungsanker oder -Stege erforderlich, die sich in das Gehäuseinnere erstrecken und ein Gegenlager an einer steifen Struktur benötigen.

### Offenbarung der Erfindung

Der Erfindung liegt die Aufgabe zugrunde, ein Ansaugsystem einer Brennkraftmaschine zu schaffen, welches ein Luftfiltergehäuse aufweist, das körperschalloptimiert ist und einen einfachen und kostengünstigen Aufbau aufweist. Diese Aufgabe wird durch die Merkmale des unabhängigen Anspruchs 1 gelöst.

Der Vorteil der Erfindung liegt darin, dass keine Verstrebungen oder Zuganker benötigt werden, die in das Gehäuseinnere ragen. Es genügt, den zu dämpfenden Gehäusebereich mit einem schwingungsdämpfenden Element auszustatten. Dieses Element wird erfindungsgemäß indirekt über eine Andruckplatte positioniert bzw. fixiert.

Das Luftfiltergehäuse besteht aus einem Kunststoffmaterial, insbesondere einem thermoplastischen Kunststoff, ebenso die Andruckplatte. Damit lässt sich diese Andruckplatte relativ einfach mit dem Gehäuse verbinden, beispielsweise erfolgt die Verbindung der beiden Teile über Vibrationsschweißen. Damit eine Außenstruktur des Luftfiltergehäuses hinsichtlich der optischen Eigenschaften nicht verändert wird, ist es vorteilhaft, die Schweißverbindung an den Stellen vorzunehmen, an welchen keine Beeinträchtigung der optischen Eigenschaften erfolgt oder zu erwarten ist.

Erfindungsgemäß ist das die Schwingungen dämpfende Element, eine Metallplatte, die der Kontur des Gehäusebereichs angepasst ist oder sich durch eine Verformung anpassen lässt.

Weiterbildungsgemäß kann die Andruckplatte Luftleitrippen oder Luftleitkanäle aufweisen. Neben der Funktion als Fixierungselement hat die Andruckplatte dann auch die Eigenschaft, eine bestimmte Luftströmung zu erzeugen bzw. die Luftströmung zu beeinflussen.

Gemäß einer weiteren Ausgestaltung der Erfindung ist das Luftfiltergehäuse zweiteilig gestaltet, es besteht aus einem Unterteil oder Boden und einem Oberteil. In einem oder in beiden Teilen können schwingungsdämpfende Elemente angeordnet sein, die Verbindung der beiden Gehäuseteile erfolgt zweckmäßigerweise durch eine Schweißverbindung. In vorteilhafter Weise erstreckt sich die Andruckplatte bis in den Bereich der Schweißverbindung und kann in einem Arbeitsgang mit den beiden Gehäuseteilen verschweißt bzw. befestigt oder verspannt werden.

Die Erfindung betrifft auch ein Verfahren zum Herstellen eines Ansaugsystems einer Brennkraftmaschine, wobei zunächst die Gehäuseteile im Spritzgießverfahren aus Kunststoff hergestellt werden. Anschließend wird in wenigstens ein Gehäuseteil ein Dämpfungsblech eingelegt und eine Andruckplatte auf dem Dämpfungsblech angebracht wird. Die Andruckplatte wird bei dem Verschweißen der beiden Gehäuseteile miteinander über deren Schweißverbindung fixiert. Da die Andruckplatte selbst auch ein thermoplastisches Kunststoffteil ist und üblicherweise kleinere Abmessungen besitzt, als eines der beiden Gehäuseteile, besteht die Möglichkeit, ein Gehäuseteil und die Andruckplatte in einem gemeinsamen Spritzgießwerkzeug zu fertigen. Besonders vorteilhaft ist es, wenn unbelegte Räume des Spritzgießwerkzeuges, die nicht für ein Gehäuseteil benötigt werden, als Kavität für die Andruckplatte genutzt werden.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

Weitere Einzelheiten der Erfindung werden in der Zeichnung anhand von schematischen Ausführungsbeispielen beschrieben. Es zeigen

Figur 1 ein Ansaugsystem einer Brennkraftmaschine in einer Schnittdarstellung,

Figur 2 in einer Detaildarstellung die Anordnung eines schwingungdämpfenden Element,

Figur 3 eine Schnittdarstellung gemäß Schnitt A-A der Fig. 2,

Figur 4 eine Draufsicht auf eine Andruckplatte mit Dämpfungsplatte,

Figur 5 eine Seitenansicht der in Figur 4 gezeigten Andruckplatte.

### Ausführungsform(en) der Erfindung

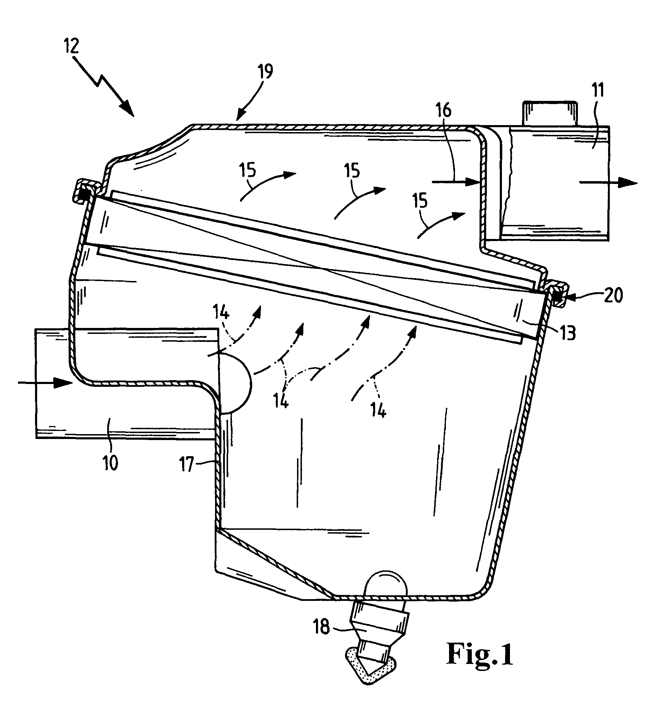

Das in Figur 1 dargestellte Ansaugsystem besteht aus einer Rohluftleitung 10, die hier nur teilweise dargestellt ist, einer Reinluftleitung 11, die ebenfalls nur als kurzer Stutzen gezeigt ist, sowie einem Luftfiltergehäuse 12. In diesem Luftfiltergehäuse befindet sich ein Luftfilterelement 13. Die über die Rohluftleitung einströmende Luft bewegt sich gemäß den strichpunktiert dargestellten Pfeilen 14 nach oben, strömt durch das Luftfilterelement 13, wird dort gereinigt und verlässt gemäß den Pfeilen 15 und 16 über die Reinluftleitung 11 das Luftfiltergehäuse.

Das Gehäuse selbst besteht aus einem Gehäuseunterteil 17, an welchem ein Staubaustragventil 18 angeordnet sein kann , sowie einem ersten Gehäuseoberteil 19. Die Verbindung zwischen Gehäuseoberteil 19 und Gehäuseunterteil 17 erfolgt im Bereich des Luftfilterelements 13 durch eine entsprechende Ausformung des Verbindungsbereichs unter Zwischenschaltung einer Dichtung 20. Üblicherweise erfolgt die Fixierung des Gehäuseoberteiles 19 mit Klammern oder mit Schrauben an dem Gehäuseunterteil 17.

Das Gehäuseoberteil 19 selbst kann mehrschalig aufgebaut sein, dies bedeutet, dass dieses nicht aus einem einzigen Element besteht, sondern aus einem ersten, öffenbaren Element, das zum Austausch des Luftfilterelements 13 erforderlich ist, sowie einem oder mehrere Elemente, die nicht öffenbar sind, wie z. B. Luftführungsteile, Verbindungskammern oder auch Resonanzkammern. Auch diese sind Teile der Gehäusewand.

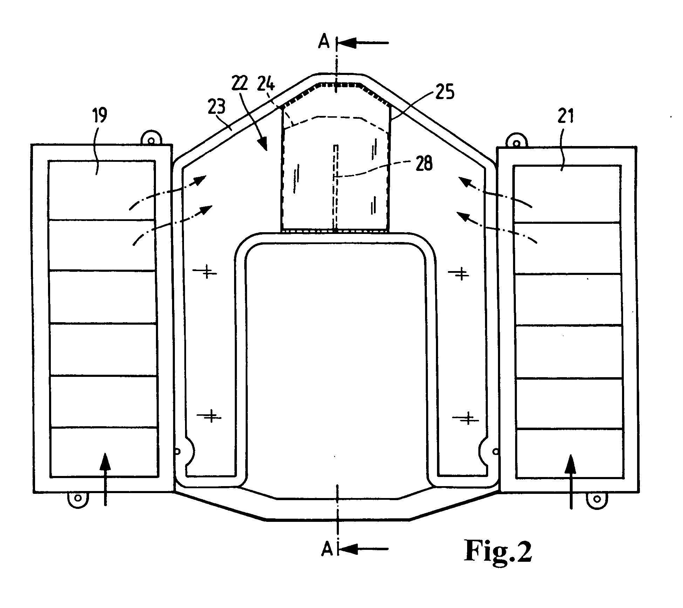

Üblicherweise werden solche Luftführungskammern ebenfalls mehrteilig hergestellt, d. h. sie besitzen ein Oberteil, welches mit dem Gehäuseoberteil 19 einteilig hergestellt ist und sie besitzen Unterteile, die mit dem Oberteil verschweißt sind. Ein solches Oberteil ist in Figur 2 gezeigt. Zu erkennen ist in dieser Figur in einer Draufsichtdarstellung das Gehäuseoberteil 19, ein symmetrisch zu dem Gehäuseoberteil 19 angeordnetes weiteres Gehäuseoberteil 21, sowie eine zwischen den beiden Gehäuseoberteilen 19 und 21 angeordnete Abdeckung 22, welche Luftführungskanäle verschließt. Diese Abdeckung 22 ist an dem umlaufenden Rand 23 mit einem darunter liegenden Boden 30 verschweißt, die Verschweißung erfolgt beispielsweise im Vibrationsschweißverfahren. Die Abdeckung ist U-förmig ausgestaltet, wobei die zwei vertikalen Schenkel relativ schmal gestaltet sind, der Verbindungsschenkel jedoch eine große Oberfläche besitzt.

Zur Vermeidung von Resonanzschwingungen im Bereich dieser Oberfläche ist es zweckmäßig, diese zu stabilisieren. Gleichzeitig ist die Abdeckung 22 in diesem Bereich jedoch auch ein Designelement, welches eine besonders geformte und gestaltete Oberfläche aufweist. Daher ist es nicht möglich innen liegende Verrippungen oder Verstärkungen, die besonders bei thermoplastischem Kunststoff zu sichtbaren Konturen an der Oberfläche führen, anzubringen. Deshalb wird die Abdeckung 22 auf der Innenseite mit einem Blech aus einem metallischen Werkstoff versehen, wobei dieses Blech selbstverständlich fixiert werden muss. Das Blech sorgt für eine Versteifung, ohne den optischen Eindruck der Oberfläche zu beeinflussen. Eine unmittelbare Befestigung des Blechs an dieser Innenwand ist nicht möglich, deshalb wird dieses mit einer Andruckplatte fixiert.

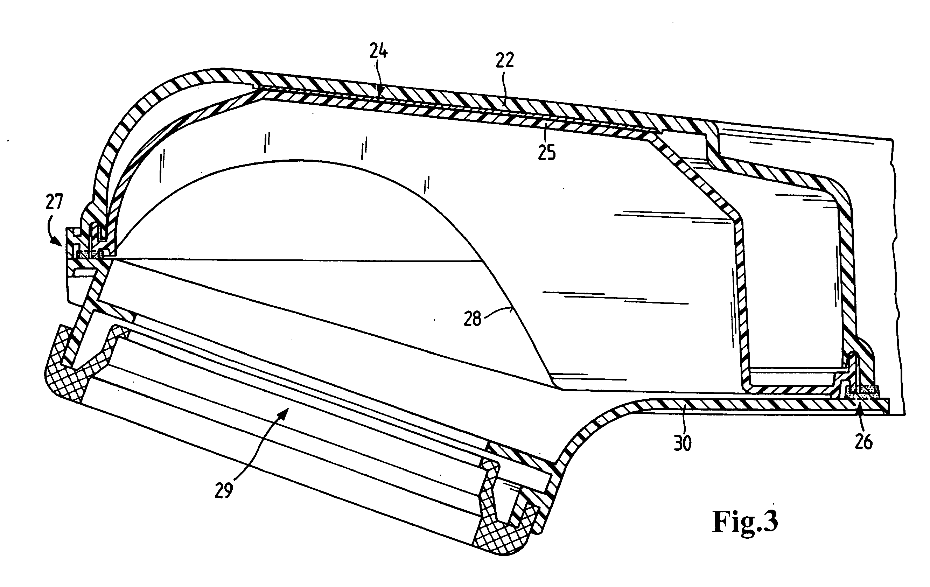

In Figur 3 ist in einer Schnittdarstellung gemäß Schnitt AA der Figur 2 dieser Aufbau dargestellt. Die Abdeckung 22 ist - wie bereits erwähnt - über eine Schweißverbindung mit dem Boden 30 verbunden. Auf der Innenseite der Abdeckung 22 befindet sich ein Dämpfungsblech 24. Die Stärke des Blechs beträgt 0,5 mm. Das Blech wird mit einer Andruckplatte 25 angedrückt, diese Andruckplatte weist im Bereich des Dämpfungsblechs 24 dessen Kontur auf. Die Andruckplatte 25 wird befestigt im Bereich der Schweißverbindung zwischen Abdeckung 22 und Boden 30 im Bereich 26 und 27. Bei einer Montage der Bauteile wird zunächst das Dämpfungsblech 24 auf die Abdeckung 22 gelegt, anschließend die Andruckplatte 25 auf das Dämpfungsblech 24 und anschließend das Boden 30 mit der Abdeckung 22 verschweißt.

Durch die Integration der Andruckplatte 25 in den Schweißbereich 26, 27 erfolgt gleichzeitig auch eine Verschweißung derselben, sodass kein zusätzlicher Arbeitsgang benötigt wird und die Andruckplatte 25 zuverlässig das Dämpfungsblech 24 fixiert.

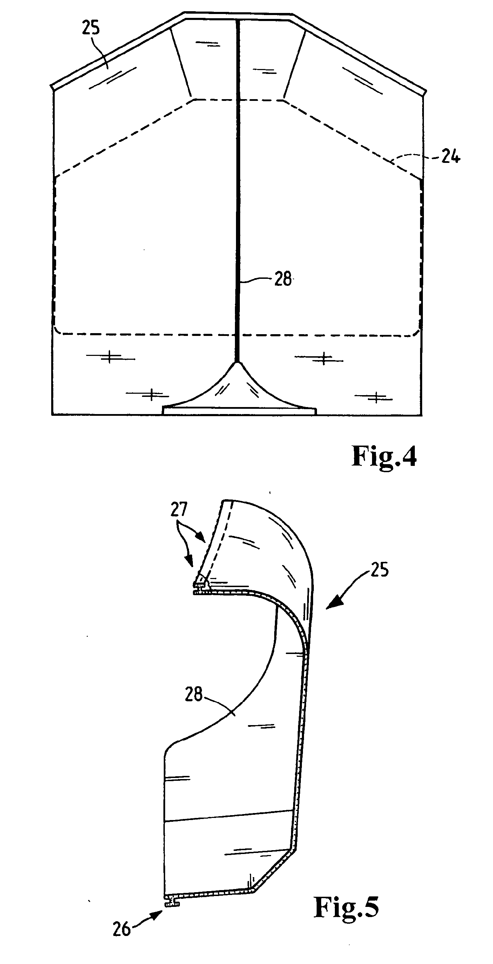

Figur 4 zeigt die Andruckplatte 25 als Einzelteil in der Draufsicht.

Figur 5 zeigt diese Andruckplatte 25 in einer Seitenansicht. Es ist zu erkennen, dass der Schweißbereich derart gestaltet ist, dass er sich einerseits in das Schweißprofil der Abdeckung 22 einbinden lässt bzw. dort eingehängt werden kann. Andererseits weist dieser Bereich auch Schweißstege auf, die sowohl mit der Abdeckung als auch mit dem Gehäuseunterteil verschweißt werden.

Figur 4 zeigt die Kontur des Dämpfungsbleches 24 mit der vereinfachten Andruckplatte 25. Selbstverständlich besteht die Möglichkeit, das Dämpfungsblech 24 mit unterschiedlichen Konturen zu versehen. Zweckmäßig wird die Kontur dem Schwingungsverhalten der Abdeckplatte angepasst um eine optimale Dämpfung zu erzielen.

Wie in Figur 5 gezeigt, weist die Andruckplatte 25 eine Luftleitfläche 28 auf, diese steht als Schwert mittig im Luftstrom. Figur 2 zeigt dieses Schwert in einer gestrichelt dargestellten Anordnung. Die Luftleitfläche 28 hat die Aufgabe, die von den beiden Luftfilterelementen kommenden Luftströme zu richten und in den vorderen Bereich zu führen, wo sie über eine in Figur 3 dargestellte Öffnung 29 der Brennkraftmaschine zugeführt werden.

## Patentansprüche

1. Ansaugsystem einer Brennkraftmaschine mit wenigstens einer Rohluftleitung (10), wenigstens einem Luftfilter (13), welcher in einem Luftfiltergehäuse (12) bestehend aus Kunststoff angeordnet ist, wenigstens einer Reinluftleitung (11), wobei an wenigstens einer Gehäusewand des Luftfiltergehäuses (12) ein, Schwingungen der Gehäusewand dämpfendes Element (24) vorgesehen ist und wobei dieses Element indirekt über ein Andruckplatte (25) fixiert ist, **dadurch gekennzeichnet, dass** das Schwingungen dämpfende Element (24) eine Metallplatte ist, die sich der Kontur des Gehäusebereichs (22) an welches sie angeordnet ist, anpasst oder angepasst ist.

2. Ansaugsystem einer Brennkraftmaschine nach Anspruch 1, wobei die Andruckplatte (25) Luftleitrippen und/oder Luftleitkanäle (28) aufweist.

3. Ansaugsystem einer Brennkraftmaschine nach einem der vorherigen Ansprüche, wobei das Gehäuse (17, 19), an welchem sich das Schwingungen dämpfende Element (24) befindet, bzw. angeordnet ist, wenigstens zweiteilig ist und die beiden Teile über Schweißverbindungen miteinander verbindbar sind und wobei die Andruckplatte (25) sich in diese Schweißverbindung erstreckt und mit den beiden Gehäuseteilen verschweißt ist.

4. Ansaugsystem einer Brennkraftmaschine nach einem der vorherigen Ansprüche, **dadurch gekennzeichnet, dass** das Gehäuse mehrere Sandwichstrukturen zur Verbesserung der akustischen Eigenschaften aufweist.

5. Verfahren zum Herstellen eines Ansaugsystems einer Brennkraftmaschine nach Anspruch 1, wobei wenigstens zwei Gehäuseteile (17, 19) im Spritzgießverfahren aus Kunststoff hergestellt werden, in das erste Gehäuseteil (19) ein Dämpfungsblech (24) eingelegt wird und anschließend eine Andruckplatte (25) auf dem Dämpfungsblech (24) angebracht wird und wobei die Andruckplatte (25) bei dem Verschweißen der beiden Gehäuseteile (17, 19) über die Schweißverbindung fixiert wird.

6. Verfahren zum Herstellen nach Anspruch 5, **dadurch gekennzeichnet, dass** die Andruckplatte (25) und ein Gehäuseteil (17) in einem gemeinsamen Spritzgießwerkzeug gefertigt wird.

## Claims

1. Intake system of an internal combustion engine, the said intake system including at least one non filtered air line (10), at least one air filter (13), which is disposed in an air filter housing made of plastics material, and at least one filtered air line (11), wherein on at least one housing wall of the air filter housing (12) there is provided an element (24) that damps vibrations of the housing wall and wherein the said element is secured in an indirect manner by means of a pressure plate (25), **characterised in that** the element (24) that damps vibrations is a metal plate, which adapts or is adapted to the contour of the housing region (22) on which it is disposed.

2. Intake system of an internal combustion engine according to claim 1, wherein the pressure plate (25) includes air guiding ribs and/or air guiding ducts (28).

3. Intake system of an internal combustion engine according to one of the preceding claims, wherein the housing (17, 19), on which the element (24) that damps the vibrations is situated or respectively is disposed, is at least in two parts and the two parts are interconnectable by means of weld connections and wherein the pressure plate (25) extends into the said weld connection and is welded with the two housing parts.

4. Intake system of an internal combustion engine according to one of the preceding claims, **characterised in that** the housing includes a plurality of sandwich structures to improve the acoustic characteristics.

5. Method for producing an intake system of an internal combustion engine according to claim 1, wherein at least two housing parts (17, 19) are produced from plastics material using the injection moulding method, a damping plate (24) being inserted into the first housing part (19) and a pressure plate (25) subsequently being mounted on the damping plate (24) and wherein the pressure plate (25) is secured by means of the weld connection when the two housing parts (17, 19) are welded.

6. Method for producing according to claim 5, **characterised in that** the pressure plate (25) and one housing part (17) are made in a common injection moulding tool.

## Revendications

1. Système d'admission d'un moteur à combustion interne comportant au moins une conduite d'air (10), au moins un filtre à air (13) logé dans un boîtier de filtre (12) en matière plastique, au moins une conduite d'air filtré (11),
et sur au moins une partie du boîtier de filtre à air (12) il est prévu un élément (24) amortissant les vibrations de la paroi du boîtier, et
cet élément est bloqué indirectement par une plaque de pression (25),
**caractérisé en ce que**
l'élément (24) amortissant les vibrations est une plaque métallique adaptée ou qui s'adapte aux contours de la région (22) du boîtier à laquelle elle est associée.

2. Système d'admission d'un moteur à combustion interne selon la revendication (1) dans lequel la plaque de pression (25) comporte des nervures de guidage d'air et/ou des canaux de guidage d'air (28).

3. Système d'admission d'un moteur à combustion interne selon l'une des revendications précédentes, dans lequel
le boîtier (17, 19) muni de l'élément (24) amortissant les vibrations ou sur lequel il est fixé, est au moins en deux parties et les deux parties sont reliées l'une à l'autre par des soudures, et
la plaque de pression (25) s'étend dans la liaison soudée et elle est soudée aux deux parties de boîtier.

4. Système d'admission d'un moteur à combustion interne selon l'une des revendications précédentes,
**caractérisé en ce que**
le boîtier comporte plusieurs structures en sandwich pour améliorer les caractéristiques acoustiques.

5. Procédé de fabrication d'un système d'admission d'un moteur à combustion interne selon la revendication 1, selon lequel on fabrique au moins deux parties de boîtier (17, 19) par un procédé d'injection matière plastique, selon lequel on place une tôle d'amortissement (24) dans la première partie de boîtier (19) et ensuite on installe une plaque de pression (25) sur la tôle d'amortissement (24) et
on bloque la plaque de pression (25) par la liaison soudée lorsqu'on soude les deux parties de boîtier (17, 19).

6. Procédé de fabrication selon la revendication 5,
**caractérisé en ce que**
la plaque de pression (25) et une partie de boîtier (17) sont fabriquées dans le même outil d'injection.
